# EUROPÄISCHE PATENTANMELDUNG

(11) **EP 0 601 551 A1**
(43) Veröffentlichungstag der Anmeldung: **15.06.1994**
(21) Anmeldenummer: 93119724.8
(22) Anmeldetag: 08.12.1993
(51) Int. Cl.: C02F 3/04

(54) **Verfahren und Vorrichtung zur Behandlung von Abwasser**

(30) Priorität: 08.12.1992 DE 4241310
(71) Anmelder: ATU INGENIEURGESELLSCHAFT FÜR ABFALLTECHNIK UND UMWELTSCHUTZ mbH, D-80335 München (DE)
(72) Erfinder: Niedermeier, Kurt, D-87600 Kaufbeuren (DE)
(74) Vertreter: Harders, Gerhard, Dr.

(57) **Zusammenfassung**

In einem Verfahren zur Behandlung von Abwasser, das im wesentlichen keine organische Fracht mehr enthält, wird in einem Tropfkörper (10) eine Nitrifikation und eine Denitrifikation durchgeführt, indem der zur Nitrifikation benötigte Sauerstoff durch gezielte Vorbelüftung des Abwassers über eine vorgeschaltete Vorstufe bzw. einen Vorlauf oder durch regelbare Belüftungsöffnungen (22) am unteren Ende des Tropfkörpers eingetragen wird; und
der zur Denitrifikation erforderliche anoxe Zustand durch Abdichten der Oberseite des Tropfkörpers durch einen kontrollierten, aus zwei Lochscheiben bestehenden Abwasserzufluß (30,32), der zu einem Abwasserüberstand oberhalb des Tropfkörpers führt, eingestellt wird.

## Beschreibung

Die vorliegende Erfindung betrifft ein Verfahren und eine Vorrichtung zur behandlung von Abwasser gemäß dem Oberbegriff des Verfahrens- bzw. Vorrichtungshauptanspruchs.

Zur Behandlung von Ammonium-haltigen Abwässern ist es erforderlich, den Ammoniumstickstoff in Nitrat zu überführen, was durch nitrifizierende Mikroorganismen bewirkt wird, die eine aerobe Umgebung benötigen. Bei der Nitrifikation von Abwasser wird dieses Verfahren eingesetzt. Da es erwünscht und im allgemeinen auch erforderlich ist, auch das Nitrat aus dem Abwasser zu entfernen, kann an die Nitrifikation eine Denitrifikationsstufe angeschlossen werden, in der das Nitrat in Stickstoff und Wasser überführt wird. Hierzu dienen denitrifizierende Mikroorganismen, die eine anaerobe Umgebung benötigen.

Es ist bereits versucht worden, eine Denitrifikation und Nitrifikation in einem einzigen Reaktionsgefäß durchzuführen. Dazu müssen sowohl aerobe als auch anaerobe Zonen geschaffen werden, was aufwendig ist. So ist beispielsweise in der DE 29 09 168 C2 ein Verfahren und eine Einrichtung zur aeroben und anaeroben Behandlung von Abwasser beschrieben, bei dem nach dem Belebtschlammverfahren in einem im Grundriß kreisförmigen Reinigungsbecken, dessen Inhalt mit Hilfe von umlaufenden Belüftern belüftet und in umlaufende Bewegung versetzt wird und auf einem Abschnitt der Umlaufbahn der Belüfter eine größere Luftmenge in das Abwasser einträgt als auf dem restlichen gedrosselt belüfteten Abschnitt der Umlaufbahn. Dadurch wird in dem Abschnitt der Umlaufbahn mit der stärkeren Belüftung ein Abbau bis zur Nitrifikation bewirkt, während sich in dem Abschnitt mit gedrosselter Belüftung ein Abbau des aus den stickstoffhaltigen Verunreinigungen entstandenen Nitrats einstellt. Dieses Verfahren erfordert einen hohen baulichen und regeltechnischen Aufwand.

Aufgabe der vorliegenden Erfindung ist es, ein Verfahren und eine Vorrichtung zur Nitrifikation und Denitrifikation von Abwasser zu schaffen, das einfach durchführbar ist und einen geringen apparativen und regeltechnischen Aufwand erfordert.

Gelöst wird diese Aufgabe erfindungsgemäß durch ein gattungsgemäßes Verfahren bzw. eine gattungsgemäße Vorrichtung mit den kennzeichnenden Merkmalen des Verfahrens- bzw. Vorrichtungshauptanspruchs. Die Unteransprüche geben bevorzugte Ausgestaltungen der Erfindung wieder.

Es wurde überraschenderweise gefunden, daß in einem als Tropfkörper ausgestalteten Behälter neben der Nitrifikation eine zusätzliche Denitrifikation möglich ist, wenn der zur Nitrifikation benötigte Sauerstoff durch eine Vorbelüftung, beispielsweise in einer Vorstufe, oder über regelbare Belüftungsöffnungen am Boden des Tropfkörpers gezielt eingetragen wird und der zur Denitrifikation erforderliche anoxe Zustand durch Abdichtung des Tropfkörpers an seiner Oberseite durch einen kontrollierten Abwasserzufluß erfolgt, der zu einem Abwasserüberstand oberhalb des Tropfkörpers führt. Dadurch ist eine gezielt regelbare Sauerstoffzufuhr möglich. Unter diesen Bedingungen bildet sich ein biologischer Rasen aus, der sowohl nitrifizierende als auch denitrifizierende Mikroorganismen bzw. Schichten von Mikroorganismen enthält.

Der Sauerstoffgehalt innerhalb des Tropfkörpers liegt dabei niedriger als in der Umgebungsluft, er wird im allgemeinen niedriger als 20 Vol.-% liegen, insbesondere unterhalb von 18 %, bevorzugt unterhalb von 15 %.

Zur Durchführung des erfindungsgemäßen Verfahrens ist es zunächst erforderlich, die in dem Abwasser enthaltene organische Fracht weitgehend zu entfernen. Dies kann in einer vorgeschalteten ersten biologischen Stufe geschehen, die z. B. nach dem Tropfkörperverfahren oder dem Belebtschlammverfahren durchgeführt werden kann. Nach dem Abbau der organischen Fracht kann dann die erfindungsgemäße Abwasserbehandlung durchgeführt werden.

Der für die Nitrifikation erforderliche Sauerstoff kann über den Zulauf durch eine Vorbelüftung oder über eine vorgeschaltete Vorstufe, beispielsweise beim Abbau der organischen Fracht geregelt eingetragen werden. Auch eine separate Vorbelüftung ist denkbar. So können am unteren Ende des eingesetzten Tropfkörpers Lüftungsöffnungen vorgesehen sein, die entsprechend der erforderlichen Sauerstoffzufuhr regelbar sind.

Der zur Denitrifikation erforderliche anoxe Zustand wird durch eine Abdeckung des Tropfkörpers an seiner oberen Oberfläche erreicht. Dadurch läßt sich ein Abwasserüberstand über dem Tropfkörper erhalten, wobei sich der Zufluß des Abwassers in den Tropfkörper so dosieren läßt, daß der Abwasserüberstand den Tropfkörper nach oben hin abdichtet. Auf diese Weise läßt sich mit einer sehr einfachen Regelung des Zuflusses in den Tropfkörper eine sehr genaue Einstellung des anoxen Zustands, der eine Aufrechterhaltung der Nitrifikation bei gleichzeitiger Gewährleistung der Denitrifikationsreaktion im biologischen Rasen ermöglicht. Durch die Regelung der Sauerstoffkonzentration über den Zulauf bzw. eine Vorstufe und die Regelung des anoxen Zustands über den geregelten Zustrom des Abwassers in einem geschlossenen Tropfkörper läßt sich also mit nur zwei Regelgrößen sehr schnell ein stabiler Zustand einstellen, bei dem der Biofilm sowohl denitrifizierende als auch nitrifizierende Mikroorganismen bzw. Schichten von von Mikroorganismen enthält.

Das erfindungsgemäße Verfahren läßt sich sehr einfach in einem in der Abwassertechnik üblichen Tropfkörper durchführen, der aus einem in bekannter Weise ausgestalteten runden Behälter besteht, der mit herkömmlichen Füllmaterialien, wie Schlacke, Koks, Kunststoffkörper oder dergleichen gefüllt ist. Dabei können bevorzugt Füllkörper, wie Lavaschlacke oder Kunststoff-Füllmaterialien eingesetzt werden.

Der Zufluß des Abwasser erfolgt in üblicher Weise über eine Beschickungsvorrichtung, wie z. B. einer Berieselungsvorrichtung oder einen Drehssprenger. Im Gegensatz zu einem üblichen Tropfkörper ist es beim erfindungsgemäßen Verfahren erforderlich, die obere Oberfläche des Tropfkörpers abzudecken, um die Aufrechterhaltung des anoxen Zustands zu gewährleisten. Dies kann durch eine beliebige Abdeckung geschehen, die den Zutritt von Luft verhindert und soweit abgedichtet ist, daß sich über der Abdeckung ein Flüssigkeitsüberstand aufrechterhalten läßt.

Eine vorteilhafte Ausgestaltung des Abdichtung besteht aus zwei relativ zueinander um eine gemeinsame Achse verdrehbaren Loch- oder Schlitzscheiben, die übereinander liegen und von denen mindestens eine durch einen Antrieb verdrehbar ist. Die Lochungen bzw. Schlitze weisen einen Querschnitt auf, der für den maximalen Durchfluß ausgelegt ist, Durch Verdrehung der Scheiben relativ zueinander können die Querschnittöffnungen verkleinert und der Durchfluß auf diese Weise geregelt werden. Über den Loch- bzw. Schlitzscheiben entsteht ein Überstand an Abwasser, durch den der Tropfkörper nach oben gegen unkontrollierten Luftzutritt abgedichtet wird.

Der Abwasserüberstand kann durch einen Höhenstandsmesser gemessen und zur Regelung des Abwasserzuflusses über die Aufgabevorrichtung und des Durchflusses durch die Loch- bzw. Schlitzscheiben verwendet werden.

Die Erfindung wird nachfolgen in einem Ausführungsbeispiel anhand der Figuren näher erläutert. Dabei werden alle in der Figurenbeschreibung enthaltenen Merkmale als erfindungswesentlich angesehen.
- Fig. 1: zeigt einen zur Durchführung des Verfahrens besonders geeigeneten Tropfkörper in einem senkrechten Schnitt;
- Fig. 2: zeigt eine Ansicht des gleichen Tropfkörpers von oben; und
- Fig. 3: zeigt eine schematische Ansicht einer Berieselungsvorrichtung zur Aufgabe des Abwassers auf den Tropfkörper.

Die Vorrichtung enthält einen Behälter 10, der im allgemeinen einen kreisförmigen Querschnitt aufweist. Der Behälter 10 ist mit einem Füllmaterial gefüllt, wobei sich Lavaschlacken, Kunststoff-Formkörper und auch Kuststoff-Folien als besonders geeignet erwiesen haben.

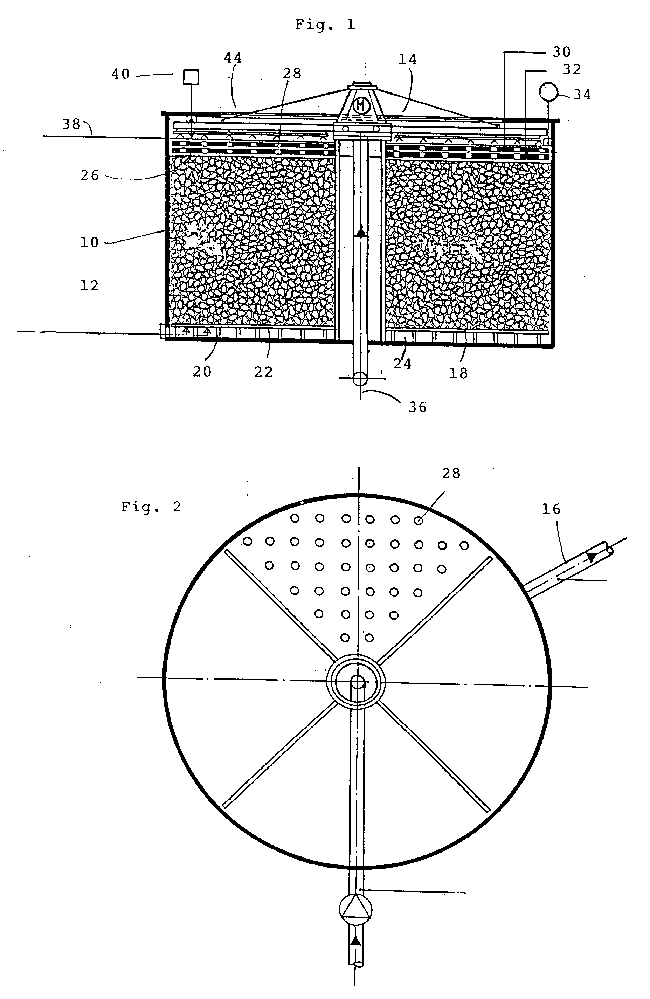

Der Boden 18 des Behälters 10 ist mit Ablauföffnungen 20 versehen, er weist zusätzliche Lüftungsschlitze 22 auf, die zur Regelung des Luftzutritts von unten verstellbar und verschließbar sind. Unter dem Boden 18 befindet sich ein Sammelraum 24, der in den Ablauf 16 mündet. Die obere Öffnung 26 des Behälters 10 wird durch zwei übereinander liegende Lochscheiben 30, 32 abgedeckt, die mit Löchern 28 ausgestattet sind. Eine der beiden Lochscheiben, in Fig. 1 die obere Lochscheibe 30, ist vermittels eines Getriebemotors 34 um eine senkrechte Achse 36 drehbar,sodaß die auf den Lochscheiben 30, 32 befindlichen Lochmuster zur Deckung gebracht werden können bzw. aus der Deckung heraus verdrehbar sind, wodurch der Abwasserdurchfluß verringert werden kann, sodaß sich über den Lochscheiben ein Abwasserüberstand 38 ausbildet.

Der Abwasserüberstand 38 kann durch einen Höhenstandsmesser 40 kontrolliert werden, wobei die Meßwerte zur Regulierung des Abwasserüberstands 38 herangezogen werden, indem beispielsweise über einen Rechner und eine Regeleinheit der Getriebemotor 34 betätigt wird. Auch eine Regelung des Abwasser-zuflusses über die Aufgabevorrichtung 14 ist möglich.

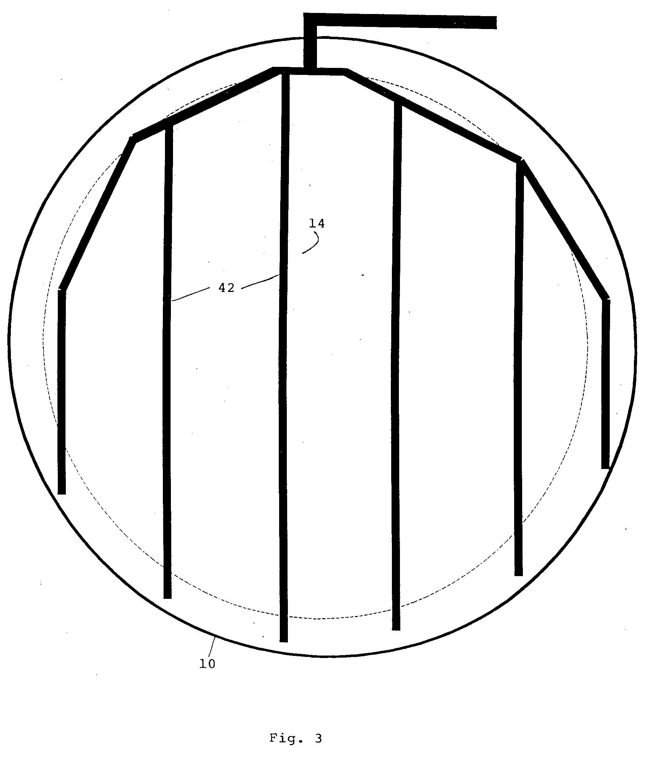

Das Abwasser wird dem Behälter 10 über die Aufgabevorrichtung 14 zugeführt, die in Fig. 1 als Drehsprenger 44 ausgebildet ist. In Fig. 3 ist eine weitere Ausführungsform einer Aufgabevorrichtung in Form eines Rohrsystems 42 gezeigt, an dessen Unterseite das Abwasser über Düsen in den Behälter 10 eingetragen wird.

Zur Durchführung des Verfahrens wird die Abwasserzufuhr über die Aufgabevorrichtung 14 und der Durchfluß durch die Lochscheiben 30, 32 so geregelt, daß sich oberhalb der Lochscheiben ein Abwasserüberstand 38 von mehrern cm, Höhe ausbildet. Das Abwasser wird in einer Vorstufe von der organischen Fracht befreit und dabei belüftet. Bei der Durchführung des Verfahrens wird vorteilhafterweise eine Kohlenstoffquelle, z. B. Methanol, zugegeben. Unter diesen Bedingungen bildet sich sehr schnell ein biologischer Rasen aus, der sowohl nitrifizierende als auch denitrifizierende Mikroorganismen bzw. Schichten von Mikroorganismen enthält.

## Patentansprüche

1. Verfahren zur Behandlung von Abwasser, das im wesentlichen keine organische Fracht mehr enthält,
**dadurch gekennzeichnet, daß**
in einem Tropfkörper eine Nitrifikation und eine Denitrifikation durchgeführt wird, indem der zur Nitrifikation benötigte Sauerstoff durch gezielte Vorbelüftung des Abwassers über eine vorgeschaltete Vorstufe bzw. einen Vorlauf oder durch regelbare Belüftungsöffnungen am unteren Ende des Tropfkörpers eingetragen wird; und
der zur Denitrifikation erforderliche anoxe Zustand durch Abdichten der Oberseite des Tropfkörpers durch einen kontrollierten Abwasserzufluß, der zu einem Abwasserüberstand oberhalb des Tropfkörpers führt, eingestellt wird.

2. Verfahren nach Anpruch 1, dadurch gekennzeichnet, daß der Abwasserüberstand durch Höhenstandsmessung abgetastet und zur Regelung des Abwasserzuflusses eingesetzt wird.

3. Verfahren nach Anspruch 1 oder 2, dadurch gekennzeichnet, daß der Tropfkörper mit Lochscheiben abgedeckt ist und die Regelung des Abwasserzuflusses durch Verstellen der Lochscheiben erfolgt.

4. Verfahren nach einem oder mehreren der Ansprüche 1 bis 3,
dadurch gekennzeichnet, daß
der Nitrifikation und Denitrifikation nach Bedarf eine Verfahrensstufe vorgeschaltet ist, die die organische Fracht abbaut und/oder das Abwasser belüftet.

5. Vorrichtung zur Durchführung des Verfahrens nach den Ansprüchen 1 bis 4, enthaltend einen zylindrischen Behälter mit einem herkömmlichen Füllmaterial und eine Abwasser-Aufgabevorrichtung, beispielsweise eine Berieselungsvorrichtung oder einen Drehsprenger,
**dadurch gekennzeichnet, daß**
die Oberfläche des Behälters (12) unterhalb der Abwasser-Aufgabevorrichtung (14) mit einer Abdeckung (16) versehen ist, die die unkontrollierte Luftzufuhr sperrt und zu einem Abwasserüberstand oberhalb des Tropfkörpers führt und seine gleichmäßige Beschickung sicherstellt.

6. Vorrichtung nach Anspruch 5, dadurch gekennzeichnet, daß die Abdeckung (16) aus mindestens zwei Lochscheiben (20, 22) besteht, die relativ zueinander verdrehbar um die gleiche Achse (24) verdrehbar sind.

7. Vorrichtung nach Anspruch 5, dadurch gekennzeichnet, daß oberhalb der Abdeckung (16) ein Höhenstandsmesser (26) vorgesehen ist, der den Abwasserüberstand kontrolliert und den Abwasserzufluß über die Aufgabevorrichtung (14) regelt.
